# FASCICULE DE BREVET EUROPEEN

(11) **EP 3 164 240 B1**
(45) Date de publication et mention de la délivrance du brevet: **15.08.2018**
(21) Numéro de dépôt: 15733843.5
(22) Date de dépôt: 18.06.2015
(51) Int. Cl.: B23D 25/12

(54) **DISPOSITIF DE CISAILLEMENT**
SCHERVORRICHTUNG
SHEARING DEVICE

(30) Priorité: 03.07.2014 FR 1456406
(43) Date de publication de la demande: 10.05.2017
(73) Titulaire: FIVES DMS, 59139 Noyelles les Seclin (FR)
(72) Inventeur: ERNST DE LA GRAETE, Conrad, F-59139 Noyelles-les-Seclin (FR)
(74) Mandataire: Bureau Duthoit Legros Associés
(86) Numéro de dépôt international: PCT/FR2015/051619
(87) Numéro de publication internationale: WO 2016/001505

(56) Documents cités:
- EP-A1- 0 596 673
- BE-A- 490 046
- FR-A1- 2 306 773

## Description

L'invention est relative à un dispositif de cisaillement destiné à fragmenter des déchets, et plus particulièrement une bande métallique, en plusieurs morceaux selon le préambule de la revendication 1. L'invention concerne en outre l'utilisation d'un dispositif de cisaillement. Le domaine de l'invention est, dans les lignes de traitement de bande métallique (par exemple les lignes de laminage), celui des dispositifs de cisaillement, rotatifs, utilisés pour fragmenter les chutes de rive en plusieurs morceaux.

Lors des opérations de traitement de bande métallique, il est connu de couper les bords de la bande métallique afin de la mettre au format de largeur souhaité. Cette opération est classiquement effectuée en ligne grâce à des paires de disques de coupe découpant la bande lors de son défilement, à proximité des bords, suivant le sens d'avancement de la bande.

La bande mise au format poursuit son avancement sur la ligne de traitement, tandis que chaque section de bande coupée, appelée « *chute de rive »* est déviée et guidée en dehors de la ligne. Le document US 2.417.556 enseigne un tel dispositif de coupe, à disques.

Cette bande est un déchet qui peut être enroulée sur un mandrin, ou encore être compactée lorsque l'accumulation de bande devient trop importante.

Une autre solution est de fragmenter ce déchet continu, en plusieurs morceaux, au cours de son défilement, grâce à un dispositif de cisaillement, rotatif.

L'homme du métier connaît ainsi de nombreux dispositifs de cisaillement, rotatifs, pour fragmenter les chutes de rive.

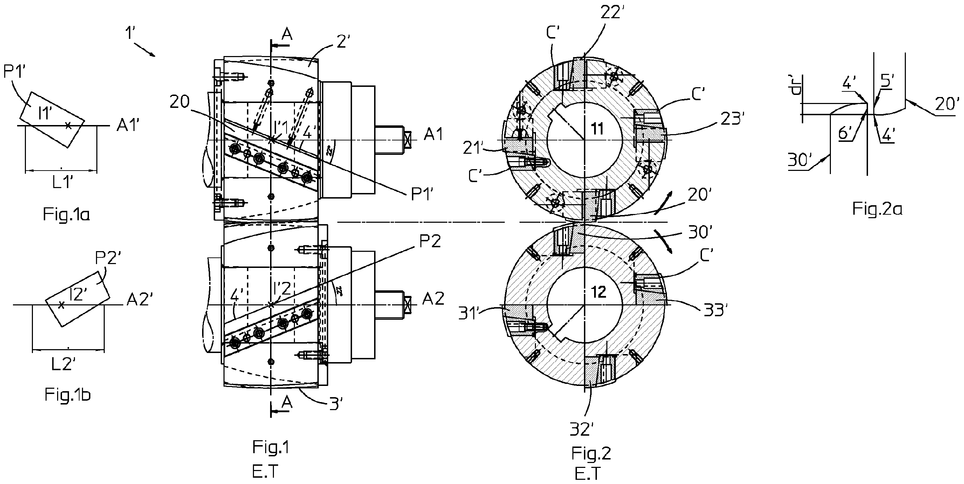

Le document US 3.799.020 divulgue, par exemple, un dispositif de cisaillement comprenant, un tambour pourvu sur sa circonférence d'une pluralité de lames, et d'une contre-lame, fixe, destinée à coopérer successivement au cisaillement avec les lames du tambour, lors de sa rotation. La figure 1 de cette antériorité illustre la chute de rive qui est déviée de la ligne et fragmentée de manière continue, entre les lames du tambour, animé d'une rotation, et la contre-lame, fixe.

L'invention s'intéresse toutefois plus particulièrement au dispositif de cisaillement à deux tambours, contrarotatifs.

Dans ce type de dispositif de cisaillement, tel qu'enseigné par le document US 4.004.479 deux tambours contrarotatifs sont disposés l'un en face de l'autre, un dispositif d'entraînement reliant les tambours et contrôlant leur vitesse de rotation. Les tambours sont pourvus de lames (ou « *couteaux* »), disposées respectivement par paire. Les lames de chacun des tambours sont agencées, transversalement au tambour, pour travailler au cisaillement par paire, et fragmenter la bande au cours de son entraînement entre les tambours.

Afin d'obtenir une bonne coupe, il est nécessaire de synchroniser précisément les rotations des tambours, ce qui permet de maîtriser le jeu de coupe, notamment circonférentielle, entre les lames de la paire, lors du cisaillement. A cet effet et tel qu'enseigné par le document US 4.004.479, il est connu de synchroniser les rotations des tambours à l'aide d'engrenages sans jeu (en anglais « *anti-backlash gear* ») liant la rotation des arbres des tambours.

Le jeu de coupe entre les lames d'une même paire, lors du cisaillement, est classiquement déterminé en fonction de l'épaisseur de la bande à couper. Plus la bande est fine, plus il est nécessaire de diminuer ce jeu de coupe. En pratique l'homme du métier respecte la règle des 1/10, à savoir que le jeu de coupe entre lames est déterminé comme 1/10 de l'épaisseur de bande à couper.

Dans le dispositif de cisaillement à tambours contrarotatifs enseigné par le document US 4.004.479, les lames sont des barres sensiblement parallélépipédiques, réparties régulièrement sur la circonférence du tambour, et orientées chacune transversalement au tambour. Les tranchants des lames sont rectilignes, sensiblement parallèles à l'axe de rotation du tambour.
Un tel dispositif n'est toutefois pas totalement satisfaisant en ce qu'il provoque des chocs, et non une coupe progressive de la chute de rives.

Afin d'obtenir un coupe progressive de la chute de rives, et ainsi limiter sensiblement le bruit de la coupe, l'homme du métier connaît, par exemple du document DE1117358, d'orienter les lames sous un angle par rapport à l'axe de rotation du tambour. En d'autres termes, la direction longitudinale de chaque lame (et de son tranchant) n'est plus parallèle à l'axe du tambour, mais inclinée par rapport à ce dernier. De plus les lames appartenant aux deux tambours présentent des orientations obliques contraires. Ainsi, le cisaillement commence, localement, aux deux extrémités longitudinales des lames de la paire et se déplace le long des lames jusqu'aux deux extrémités longitudinales opposées, ce qui permet de diminuer très sensiblement le bruit de coupe.

L'homme du métier sait par ailleurs que le diamètre de coupe (à savoir le double de la distance entre le tranchant de chaque lame et l'axe de rotation du tambour) ne peut être, dans les dispositifs de l'art antérieur, que très légèrement supérieur à l'entraxe entre les deux tambours, sous peine de provoquer, lors de leur rotation, des contacts entre les tranchants des lames et les faces de recouvrement de celles-ci, causant une usure prématurée des tranchants des lames.

Lorsque le diamètre de coupe est trop supérieur à l'entraxe, compte tenu du jeu de coupe à respecter, on obtient un recouvrement trop important entre les lames (d'une même paire) pour éviter que ces dernières ne s'entrechoquent lors du cisaillement.

Lorsque les lames sont inclinées par rapport à l'axe du tambour, de manière à obtenir une coupe progressive, tel qu'enseigné par le document DE 1117358, il est donc, selon l'état de la technique connu, nécessaire d'usiner le tranchant de manière courbe de telle façon à ce que, autant que possible, le rayon séparant l'axe du tambour et le tranchant soit constant sur la longueur de ce tranchant. Il n'est plus possible de prévoir un tranchant rectiligne, en ce que ce dernier serait, au niveau des extrémités longitudinales de la lame, localement, à un rayon bien supérieur à celui du tranchant, localement, au niveau de la zone médiane de la lame. Au niveau de ces extrémités longitudinales, on obtiendrait alors un recouvrement trop important entre les lames des tambours, pour éviter une interférence entre les tranchants de ces lames rectilignes et les faces de recouvrement des lames opposées.

Classiquement, un tel usinage courbe du tranchant des lames est réalisé à partir de lames sensiblement parallélépipédiques, préalablement montées sur chacun des tambours qui sont nécessairement des tambours amovibles, dissociables de leur arbre de rotation respectif pour permettre la réalisation de l'opération d'usinage courbe.

L'ensemble lames parallélépipédiques/tambour est alors retiré du dispositif de cisaillement et positionné sur un poste d'usinage. Sur ce poste d'usinage, les tranchants des lames sont rectifiés de manière courbe. Une fois ce travail d'usinage terminé, le tambour est retiré du poste d'usinage pour être monté sur l'arbre de rotation du dispositif de cisaillement.

Au fur et à mesure de l'usure des lames, il est possible d'utiliser des cales entre les lames et le tambour pour faire ressortir les lames du tambour, et de procéder à une nouvelle rectification des lames, suivant une trajectoire courbe, selon la procédure d'usinage précitée.

Un tel état de la technique nécessite classiquement de prévoir un jeu de tambours supplémentaires afin de permettre la rectification des lames, et dans le but de ne pas arrêter trop longuement la ligne de laminage, pendant ces périodes de maintenance.

Un défaut intrinsèque d'un tel dispositif a pour origine le caractère amovible des tambours de leur arbre respectif. Il n'est pas rare de constater un défaut de positionnement du tambour sur son arbre, ce qui entraîne inévitablement des erreurs dans les jeux de coupe, et ainsi des défauts de coupe.

On connaît, encore, du document FR 2.640.174 un dispositif de cisaillement à deux tambours contrarotatifs. Comme le document précédent, les lames ne sont pas parallèles à l'axe de rotation du tambour, mais sous un angle par rapport à ce dernier, de manière à produire un cisaillement progressif des déchets.

A la différence du document précédent, le dispositif du document FR 2.640.174 prévoit l'utilisation de lames courbes, usinées selon un rayon de courbure prédéterminée, préalablement à leur montage sur leur tambour.

Chaque lame se caractérise par des faces extérieures convexes et des faces latérales planes, et quatre tranchants (courbes) formés aux intersections entre les faces latérales et les deux faces extérieures convexes. Lorsque l'un des tranchants est usé, la lame est démontée du tambour et remontée dans une position différente afin d'exposer l'un des autres tranchants.

L'état de la technique des dispositifs de cisaillement à tambours contrarotatifs, à coupe progressive, enseigné notamment par le document FR 2.640.174 ou DE 1117358, sont, à la connaissance de la demanderesse, réservés exclusivement pour fragmenter des chutes de produits de fortes épaisseurs, typiquement supérieures à 1 mm, et présentant de fortes limites élastiques, typiquement supérieures à 300 Mpa.

Ceci s'explique en ce que, dans ces dispositifs de l'état de l'art, le diamètre de coupe (à savoir le double de la distance entre le tranchant de chaque lame et l'axe de rotation du tambour) ne peut être que très légèrement supérieur à l'entraxe entre les deux tambours, sous peine de provoquer une usure prématurée des tranchants.

Cette contrainte dimensionnelle implique un faible recouvrement entre les lames afin d'éviter que les lames ne s'entrechoquent lors du cisaillement.

Pour des produits de fortes épaisseurs et à fortes limites élastiques, de tels dispositifs permettent la coupe par rupture fragile du produit, sans qu'il y ait un recouvrement des lames et par conséquent sans risque de choc entre lames, même avec un jeu de coupe faible.

En revanche, il est connu que de tels dispositifs sont inadaptés pour des produits plus fins, notamment inférieurs à 0.3 mm, et/ou des produits mous, présentant des produits de coefficient d'allongement à la rupture importante (>20%), en ce que ces produits s'insèrent dans le jeu entre lames sans qu'il y ait rupture fragile du produit, le recouvrement étant alors insuffisant pour permettre la coupe du produit par arrachement.

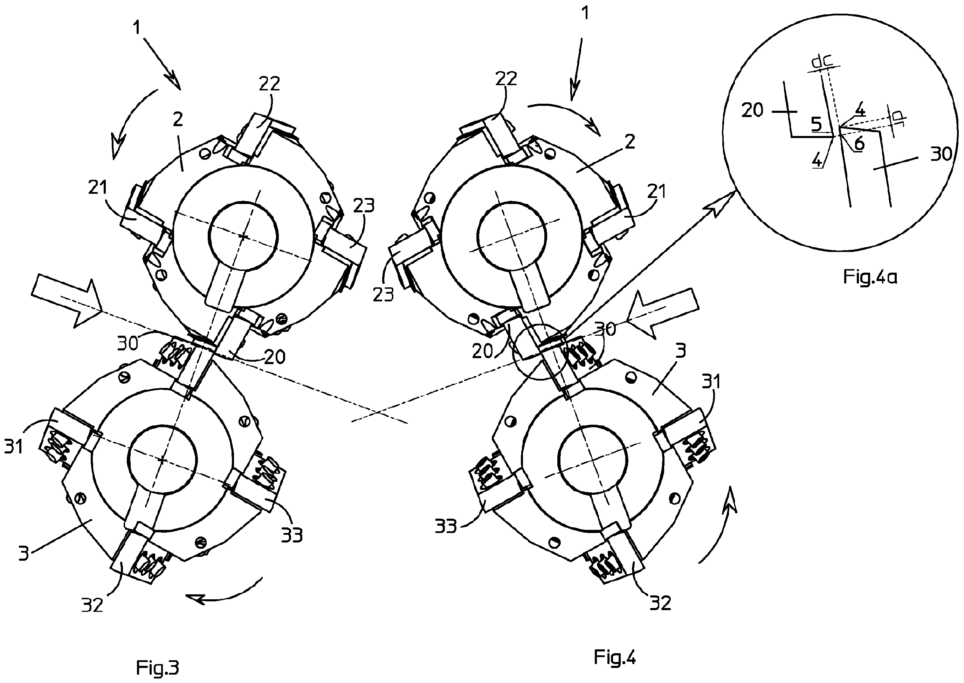

En outre, et pour certains dispositifs du type du document DE1117358, les lames sont montées sur leur tambour respectif au moyen de vis radiales et de coins. Le serrage de ces coins par vissage se doit d'être progressif et précis, classiquement selon une procédure déterminée, sous peine d'ovaliser le tambour amovible, une telle ovalisation modifiant les jeux de coupe et entraînant des défauts de coupe.
L'état de la technique des cisailles à tambours contrarotatifs connait encore du document BE 490 046 daté de 1949 qui décrit un dispositif de cisaillement selon le préambule de la revendication 1, une cisaille dont les deux lames portées respectivement par les tambours sont à tranchants rectilignes. Dans ce document, le tranchant rectiligne (appelé arête coupante) de chaque lame est d'axe strictement parallèle à l'axe de rotation du tambour correspondant, portant la lame. Ce document enseigne d'incliner les lames par rapport au plan radial passant par le tranchant afin de permettre un cisaillement franc. Ainsi et tel qu'illustré à la figure 3 du document BE 490 046, pour chaque tambour, le plan passant par la face de recouvrement de la lame n'intersecte jamais l'axe de rotation du tambour correspondant.

Ce document enseigne encore à la figure 4 de réduire les chocs lors du cisaillement, en inclinant l'axe de rotation O1-O1 du premier tambour par rapport à l'axe de rotation O2-O2 du second tambour, et alors que le tranchant rectiligne (appelé arête coupante) de chaque lame reste d'axe strictement parallèle à l'axe de rotation du tambour correspondant, portant la lame. Selon les constatations des inventeurs, une telle inclinaison entre les axes de rotation des deux tambours dans le but de réduire les chocs ne peut être que très légère et ne permet pas d'obtenir la progressivité d'un cisaillement tel qu'enseigné par le document DE1117358, lorsque les lames de la paire sont inclinées chacune d'un angle par rapport à l'axe de rotation de leur tambour correspondant, les lames de la paire portées par les deux tambours présentant des orientations obliques contraires. Selon les constatations de l'inventeur, un telle cisaille selon cette antériorité BE490046 ne permet pas de fractionner à grande vitesse, et contrairement aux cisailles des antériorités DE1117358 et FR 2640174.

On connait encore du document FR 2306773 une cisaille à tambours contrarotatifs dont les lames de la paire, portées par les deux tambours sont à tranchant rectiligne (appelé arêtes coupantes, repérées 1 et 2). Selon la description de cette antériorité, les axes de rotation des tambours repérés « xx » et « yy » sont parallèles entre eux.
Selon cette antériorité, chacune des arêtes de coupe, repérée 1 ou 2, est contenue dans un plan, repéré 3 ou 4, qui passe par l'axe de rotation du tambour xx ou yy. En outre les arêtes sont inclinées d'un même angle par rapport à la direction commune des axes de rotation de tambours et dans le but d'obtenir une coupe progressive.

Là encore, et selon les constatations de l'inventeur, une telle inclinaison de lame suivant un axe de rotation perpendiculaire au plan radial ne peut être que très minime par comparaison à l'inclinaison des lames telle qu'enseignée par le document DE 1117358 ou FR 2640174 et dont les lames portées par les tambours présentent des orientations obliques contraires. Une cisaille telle qu'enseignée par le document FR 2306773 ne permet pas d'obtenir la progressivité de coupe des cisailles des documents DE 1117358 ou encore FR 2640174. Dans le document DE 11173358 ou FR 2640174, l'inclinaison permettant la progressivité de coupe est obtenue sensiblement par une rotation de la lame selon un axe de rotation sensiblement radial et perpendiculaire à l'axe de rotation et alors que dans le document FR 2306773, l'inclinaison est obtenue par une rotation de la lame suivant un axe de rotation perpendiculaire au plan radial.
Lorsque les lames sont inclinées selon l'enseignement du document DE1117358, l'arête ou tranchant rectiligne des lames et l'axe de rotation du tambour ne sont pas coplanaires : l'arête ne peut pas être contenue dans un plan passant par l'axe de rotation du tambour comme enseigné par le document FR2306773. Selon les constatations de l'inventeur, et comme le document précédent, une telle cisaille selon cette antériorité FR2306773 ne permet pas de fractionner à grande vitesse, et contrairement aux cisailles des antériorités DE1117358 et FR 2640174.

La présente invention a pour but de pallier tout ou partie des inconvénients précités en proposant un nouveau dispositif de cisaillement à tambours contrarotatifs, à coupe progressive.

Un autre but de la présente invention est de proposer un tel dispositif de cisaillement convenant pour fragmenter une bande métallique à grande vitesse.

Plus particulièrement, un des objectifs de la présente invention, est de proposer, au moins selon un mode de réalisation, un tel dispositif de cisaillement à tambours contrarotatifs et à coupe progressive, qui permet de fragmenter des produits fins et/ou mous, notamment d'épaisseur inférieure à 1 mm, voire inférieure à 0.3 mm et/ou présentant un coefficient d'allongement important, notamment supérieur à 20%.

Un autre but de la présente invention est de proposer, au moins selon un mode de réalisation, un tel dispositif à tambours contrarotatifs qui ne nécessite pas d'usinage particulier et précis des tranchants de lames, et plus particulièrement selon une trajectoire courbe particulière.

Un autre but de la présente est de proposer, au moins selon un mode de réalisation, un tel dispositif à tambours contrarotatifs dont les tambours sont peu sensibles à l'ovalisation lors du serrage des lames sur leur tambour.

D'autres buts de la présente invention apparaîtront au cours de la description qui va suivre qui n'est donnée qu'à titre d'exemple non limitatif.

Aussi l'invention concerne tout d'abord un dispositif de cisaillement selon la revendication 1, destiné à fragmenter des déchets, en particulier fragmenter une bande métallique en plusieurs morceaux, ledit dispositif comprenant deux tambours contrarotatifs, disposés l'un en face de l'autre, les axes de rotation des tambours étant parallèles entre eux, un dispositif d'entraînement reliant les tambours et synchronisant leur vitesse de rotation, et au moins une paire de lames, les lames de la paire étant portées respectivement par les deux tambours, les lames de la paire étant destinées à coopérer par effet de cisaillement lors de la rotation des tambours pour couper les déchets, les lames de la paire présentant, à partir de leur tranchant, des faces planes, dites faces de recouvrement, se recouvrant et en regard au moins localement lors du cisaillement entre lames, chaque lame étant fixée transversalement au tambour, sous un angle par rapport à l'axe de rotation du tambour les lames de la paire portées par les deux tambours présentant des orientations obliques contraires et de telle façon que le plan passant par ladite face de recouvrement de la lame forme un angle avec l'axe de rotation du tambour correspondant et de manière à produire un cisaillement progressif. L'invention concerne en outre l'utilisation selon la revendication 13 d'un dispositif selon l'une des revendications 1 à 12. Selon l'invention, ladite face de recouvrement de chaque lame est (doublement) inclinée par rapport au tambour de telle manière que le plan passant par ladite face de recouvrement n'intersecte pas l'axe de rotation du tambour sur la largeur active du tambour.

Ici la « double » inclinaison de chaque lame est comprise par référence à l'état de la technique du document US 4.004.479 qui divulgue des tranchants de lame rectilignes, sensiblement parallèles à l'axe de rotation du tambour.

Telle qu'illustrée à la figure 3 de cette antériorité, le plan de la face de recouvrement du tranchant actif de chaque lame passe sensiblement par l'axe de rotation du tambour correspondant, ou un plan parallèle voisin de ce dernier.

Ainsi et par rapport à cet enseignement du document US 4.004.479, une première inclinaison de la face de recouvrement est obtenue par une rotation de la lame, selon un axe de rotation, passant par la face de recouvrement, et sensiblement radial, perpendiculaire à l'axe de rotation du tambour.

Autrement dit, une fois inclinée selon la première inclinaison, l'axe de rotation du tambour et le tranchant de lame ne sont pas coplanaires et ne peuvent donc pas être contenus dans un même plan, comme il est visible aux figures 5, 6 et 7, et contrairement à l'enseignement du document FR 2306776 où le tranchant de lame est toujours contenu dans un plan passant par l'axe de rotation du tambour portant la lame, lorsque inclinée par rapport à l'axe de rotation du tambour.

Cette « première » inclinaison assure, et selon l'état de la technique connu par les antériorités FR 2.640.174 ou DE 1117358 un cisaillement progressif du produit. En revanche cette première inclinaison est insuffisante à elle seule pour répondre aux problèmes identifiés dans la description pour ces antériorités ; en particulier et pour cet art antérieur :
- il est toujours nécessaire d'usiner les tranchants de manière courbe,
- ces dispositifs sont inadaptés pour des produits plus fins, notamment inférieurs à 0.3 mm, et/ou des produits mous, présentant des produits de coefficient d'allongement à la rupture importante (>20%).

On notera que dans les dispositifs de l'état de la technique connu de ces antériorités FR 2.640.174 ou DE 1117358, la lame est toujours positionnée sur le tambour de telle manière que le plan passant par la face de recouvrement du tranchant actif de la lame intersecte l'axe du tambour correspondant en un point positionné sur le segment de l'axe correspondant à la largeur active du tambour, bien souvent proche du milieu du segment.

L'invention se distingue de cet état de la technique par une « deuxième » inclinaison, obtenue par une rotation de la lame, selon un axe de rotation, passant par la face de recouvrement, et sensiblement parallèle au tranchant de lame.

A titre d'exemple non limitatif :
- la première rotation peut être de 15°(+/- 5°) et
- la deuxième rotation peut être de 9,5° (+/- 5°).

Les inclinaisons des lames d'une même paire sont telles que les faces de recouvrement de la paire sont sensiblement parallèles lorsque les lames travaillent au cisaillement.

Cette deuxième inclinaison permet que ladite face de recouvrement de chaque lame soit inclinée par rapport au tambour de telle manière que le plan passant par ladite face de recouvrement n'intersecte pas l'axe de rotation du tambour sur la largeur active du tambour. Selon les constatations de l'inventeur, cette deuxième inclinaison permet de supprimer les défauts ci-dessus identifiés

Selon les constatations des inventeurs, une telle inclinaison double des lames par rapport au tambour autorise un recouvrement plus important (à savoir un chevauchement plus important des faces de recouvrement entre lames lors du cisaillement) et/ou de prévoir un jeu de coupe entre lames plus faible par comparaison au dispositif de cisaillement de l'état de la technique, sans risque d'une interférence entre les tranchants des lames et les faces de recouvrement opposées lors de la rotation.

Obtenir un recouvrement entre lames plus important permet d'allonger plus fortement les bandes et ainsi de couper des bandes à fort coefficient d'allongement, par arrachement.

Diminuer le jeu de coupe permet de couper des bandes plus fines, une bonne coupe étant généralement obtenue en déterminant le jeu de coupe comme 1/10 de l'épaisseur de la bande à couper.

Ainsi un tel dispositif trouve une application particulière pour fragmenter une chute de rives d'épaisseur inférieure à 1 mm, voire inférieure à 0.3 mm et/ou dans un matériau présentant un coefficient d'allongement supérieur à 20%.

Une telle double inclinaison des lames permet éventuellement, et avantageusement, l'utilisation de lames présentant un tranchant rectiligne, et sans risque que les lames s'entrechoquent.

Aussi et de préférence, les lames de la paire sont chacune de section constante longitudinalement, présentant chacune un tranchant rectiligne défini à l'intersection de la face de recouvrement et d'une face extérieure de la lame.

Selon un mode de réalisation, les lames d'une paire sont positionnées sur leur tambour de manière à permettre un chevauchement desdites faces de recouvrement des lames, lors du cisaillement, supérieur à 0.33% de l'entraxe de coupe, et pour un jeu de coupe entre lames inférieur à 0.02 mm.

Selon un mode de réalisation, la lame présente au moins une face latérale plane, apte à constituer ladite face de recouvrement, au moins sur une portion de surface, ledit tranchant, rectiligne, étant défini à l'intersection de la face latérale plane et d'une face extérieure, supérieure plane.

Selon un mode de réalisation, chaque lame de la paire est une lame réversible, possédant deux positions de montage sur le tambour, ladite lame présentant deux faces latérales, parallèles et opposées, aptes à constituer chacune au moins sur une portion de surface ladite face de recouvrement, un premier tranchant, rectiligne, étant défini à l'intersection d'une des faces latérales et d'une face extérieure, supérieure, et un deuxième tranchant, rectiligne étant défini à l'intersection de l'autre face latérale et d'une autre face extérieure, inférieure.

Selon un mode de réalisation, chaque lame est fixée au tambour, au niveau d'un logement dudit tambour comprenant une face plane d'appui pour ladite face latérale portant le tranchant actif, directement ou par l'intermédiaire d'une cale.

Selon un mode de réalisation, le logement comprend, outre la face plane d'appui, dite première face d'appui pour ladite face latérale de ladite lame portant le tranchant actif, une seconde face d'appui, sensiblement perpendiculaire à la première face d'appui, servant d'appui pour une face extérieure, inférieure, de ladite lame, directement ou par l'intermédiaire d'une cale.

Selon un mode de réalisation, chaque lame présente une pluralité d'alésages pour le passage de vis de fixation, lesdites vis de fixation coopérant avec des alésages taraudés s'étendant à partir de la face plane servant d'appui pour ladite face latérale.

Selon un mode de réalisation, ledit dispositif d'entraînement reliant les tambours et synchronisant leur vitesse de rotation comprend deux arbres de rotation respectivement rigidement solidaires des deux tambours, ainsi qu'un engrenage reliant les arbres comprenant une première roue dentée et une seconde roue dentée.

De préférence, chaque tambour et son arbre de rotation correspondant sont constitués par un élément métallique d'un seul tenant. On supprime ainsi les défauts de positionnement du tambour sur l'arbre, tels que rencontrés dans les dispositifs de cisaillement à tambours amovibles.

L'invention sera mieux comprise à la lecture de la description suivante accompagnée des dessins en annexe parmi lesquels :
- La figure 1 est une vue de face des tambours d'un dispositif de cisaillement tel que connu de l'état de la technique,
- La figure la représente schématiquement l'intersection au point I1' du plan P1' passant par la face de recouvrement de la figure 1 avec l'axe A1' de rotation du tambour supérieur, ce point I1' se trouvant sur le segment de l'axe A1 correspondant à la largeur L1' du tambour, et en général, proche du milieu du segment tel que connu de l'état de la technique,
- La figure 1b représente schématiquement l'intersection au point I2' du plan P2' passant par la face de recouvrement de la figure 1 avec l'axe A2' de rotation du tambour inférieur, ce point I2' se trouvant sur le segment de l'axe A2 correspondant à la largeur L2' du tambour et en général, proche du milieu du segment tel que connu de l'état de la technique,
- La figure 2 est une vue selon la coupe A-A de la figure 1,
- La figure 2a est une vue de détail illustrant le recouvrement entre lames du dispositif de la figure 2,
- Les figures 3 et 4 sont des vues droite et gauche des tambours contrarotatifs d'un dispositif conforme à l'invention,
- La figure 4a est une vue de détail illustrant le recouvrement entre lames, ainsi que le jeu de coupe,
- La figure 5 est une vue des deux tambours du dispositif conforme à l'invention, de leur arbre de rotation, et des engrenages anti-jeu synchronisant les rotations contraires des arbres,
- La figure 5a représente schématiquement l'intersection au point I1 du plan P1 passant par la face de recouvrement d'une lame du tambour supérieur de la figure 5 avec l'axe A1 de rotation du tambour supérieur, ce point I1 se trouvant en dehors du segment de l'axe A1 correspondant à la largeur L1 du tambour par la position d'inclinaison double de la lame sur le tambour,
- La figure 5b représente schématiquement l'intersection au point I2 du plan P2 passant par la face de recouvrement d'une lame du tambour inférieur de la figure 5 avec l'axe A2 de rotation du tambour inférieur, ce point I2 se trouvant en dehors du segment de l'axe A2 correspondant à la largeur L2 du tambour par la position d'inclinaison double de la lame sur le tambour,
- Les figures 6 et 7 sont des vues respectives des deux tambours, inférieur et supérieur,
- La figure 8a et la figure 8b sont des vues selon la coupe A-A de la figure 6, respectivement pour une lame neuve et une lame usée,
- La figure 9a et la figure 9b sont des vues selon la coupe C-C de la figure 7, respectivement pour une lame neuve et une lame usée,
- La figure 9c est une vue de côté d'une lame,
- La figure 10 est une vue de coupe du dispositif de la figure 5 selon un plan passant par les deux axes de rotation des tambours,
- La figure 11 et la figure 12 sont respectivement des vues selon les coupes B-B et C-C telles qu'illustrées à la figure 10.

Un dispositif de cisaillement à tambours contrarotatifs selon l'état de la technique, connu par la demanderesse est illustré aux figures 1 et 2.

Il s'agit d'un dispositif de cisaillement 1', destiné à fragmenter des déchets, en particulier fragmenter une bande métallique, telle qu'une chute de rives, en plusieurs morceaux. Ce dispositif 1' comprend deux tambours 2',3' contrarotatifs, disposés l'un en face de l'autre, les axes de rotation des tambours étant sensiblement parallèles.

Un dispositif d'entraînement (non illustré) relie les tambours et synchronise leur vitesse de rotation.

Ce dispositif 1' comprend au moins une paire de lames 20' 30'; 21' 31'; 22' 32'; 23',33' (et plus particulièrement quatre paires de lames), les lames 20', 30' ; 21', 31'; 22', 32' ; 23', 33' de la paire étant portées respectivement par les deux tambours 2',3', les lames de la paire étant destinées à coopérer par effet de cisaillement, lors de la rotation des tambours 2',3' pour couper les déchets.

Telles qu'illustrées à la figure 2a, les lames de la paire présentent, à partir de leur tranchant 4', des faces planes 5',6', dites faces de recouvrement, se recouvrant et en regard au moins localement lors du cisaillement entre lames 20', 30' ; 21', 31'; 22', 32' ; 23' ,33'.

Telle qu'illustrée à la figure 1, chaque lame est fixée transversalement au tambour 2' ;3', sous un angle par rapport à l'axe de rotation A1' (ou A2') du tambour 2' ;3' et de telle façon que le plan P1' (ou P2') passant par ladite face de recouvrement 5',6' de la lame forme un angle avec l'axe de rotation A1 ; A2 du tambour correspondant de manière à produire un cisaillement progressif.

Les lames de la paire portées par les deux tambours 2' et 3' ont par ailleurs des orientations obliques opposées.

Ainsi, le cisaillement commence, localement, aux deux extrémités longitudinales des lames de la paire et se déplace le long des lames jusqu'aux deux extrémités longitudinales opposées, ce qui permet de diminuer très sensiblement le bruit de coupe. Selon les constatations de la présente demanderesse, un tel état de la technique présente les inconvénients mentionnés dans l'introduction.

Le diamètre de coupe (à savoir le double de la distance entre le tranchant 4' de chaque lame et l'axe de rotation du tambour correspondant A1' ou A2') ne peut être, dans ces dispositifs de l'art antérieur, que très légèrement supérieur à l'entraxe (Distance entre l'axe A1' et l'axe A2') entre les deux tambours, sous peine de provoquer une usure prématurée des tranchants. Dans un tel dispositif de l'état de la technique, le diamètre de coupe est au maximum 0.13% plus grand que l'entraxe de coupe, avec un jeu de 0.05 mm.

Cette contrainte dimensionnelle implique, dans ce type de dispositif, un faible recouvrement entre les lames afin d'éviter que les lames ne s'entrechoquent lors du cisaillement.

Ce recouvrement est illustré à la figure 2a par la dimension « dr' ». Pour des produits de fortes épaisseurs et à fortes limites élastiques, de tels dispositifs permettent la coupe par rupture du produit, sans que le recouvrement et le jeu de coupe soient primordiaux à la coupe.

En revanche, il est connu que de tels dispositifs sont inadaptés pour des produits plus fins, notamment inférieurs à 0.3 mm, et/ou des produits mous, présentant des produits de coefficient d'allongement à la rupture importante (>20%), en ce que ces produits s'insèrent dans le jeu entre lames, le recouvrement étant alors insuffisant pour permettre la coupe du produit par arrachement.

On notera que dans les dispositifs de l'état de la technique, et tel qu'illustré à la figure 1, la lame est toujours positionnée sur le tambour de telle manière que le plan P1' (resp P2') passant par la face de recouvrement 5' (resp 6') de la lame intersecte l'axe du tambour correspondant A1' (ou A2') en un point I1' (resp I2') positionné sur le segment de l'axe correspondant à la largeur active du tambour L1' (ou L2').

On entend par largeur active la largeur du tambour où se produit la coupe.

Ainsi et tel qu'illustré à la figure 1a, le plan P1' passant par la face de recouvrement 5' de la lame 20' intersecte l'axe A1' au point I1'. Ce point I1' est positionné sur le segment de l'axe correspondant à la largeur L1' du tambour 2'.

De même et tel qu'illustré à la figure 1b, le plan P2' passant par la face de recouvrement 6' intersecte l'axe A2 au point I2'. Ce point I2' est positionné sur le segment de l'axe correspondant à la largeur L2' du tambour 3'.

Ainsi et selon l'état de la technique connu, l'inclinaison des lames sur leur tambour est telle que le point d'intersection I1' (ou I2') est toujours positionné sur le segment de l'axe A1' (ou A2') correspondant à la largeur active du tambour correspondant L1' (ou L2').

Un tel dispositif selon l'état de la technique nécessite d'usiner les tranchants des lames selon des trajectoires courbes. L'état de la technique illustré à la figure 1 et à la figure 2 est du type à tambours amovibles. L'usinage des tranchants des lames s'effectue sur leur tambour amovible, sur des postes d'usinage spécifiques.

Le serrage des lames dans les logements de tambours est réalisé au moyen de coins C', qui entraînent une ovalisation des tambours lorsque la procédure de serrage n'est pas respectée.

L'invention est née de la constatation par les inventeurs qu'il est possible, dans de tels dispositifs de cisaillement, d'améliorer sensiblement la cinématique au cisaillement des lames, et en particulier d'augmenter le recouvrement entre les lames, en modifiant sensiblement l'inclinaison des lames par rapport à leur tambour correspondant, et plus particulièrement l'inclinaison des faces de recouvrement des lames par rapport au tambour, dans le but d'éviter que les lames des tambours n'interfèrent entre elles.

Une telle configuration selon l'invention permet des recouvrements (distance « dr » à la figure 4a) plus importants lors de la coupe, par comparaison aux dispositifs de cisaillement de l'état de la technique connu, ce qui favorise la coupe des déchets par arrachement et donc la coupe de produit « mou ».

Alternativement, ou additionnellement, cette configuration permet de diminuer le jeu de coupe (distance « dc »), par comparaison aux dispositifs de cisaillement de l'état de la technique connu, permettant de couper des déchets plus fins.

Une telle inclinaison des lames se caractérise, selon l'invention, en ce que ladite face de recouvrement 5 ;6 de chaque lame 20 ; 30 ; 21 ; 31; 22, 32 ; 23 ;33 est doublement inclinée par rapport au tambour 2 ;3 correspondant de telle manière que le plan P1 (ou P2) passant par ladite face de recouvrement 5 (ou 6) n'intersecte pas l'axe de rotation du tambour 2 (ou 3) sur la largeur active L1 (ou L2) du tambour correspondant 2 (ou 3).

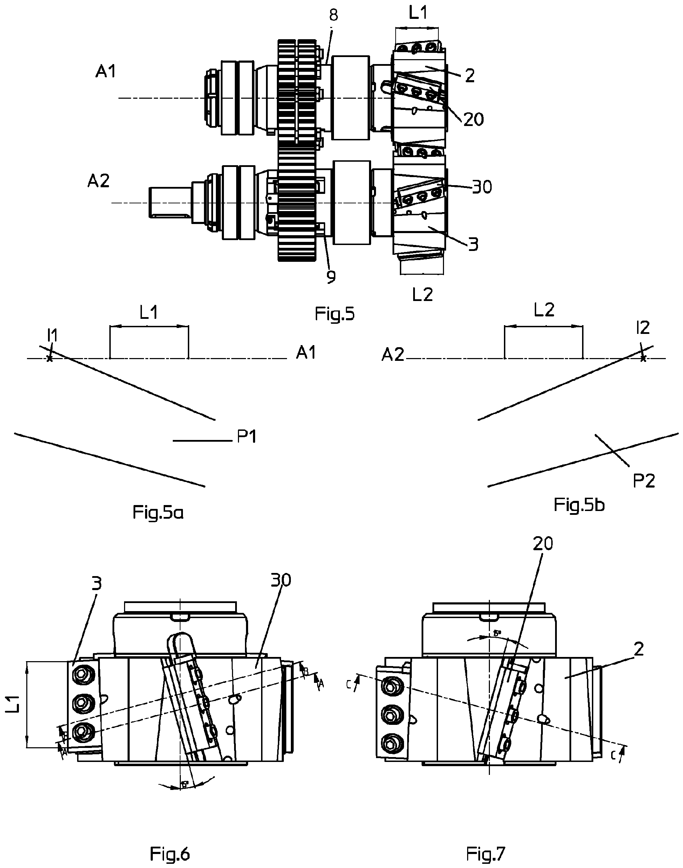

Ainsi tel qu'illustré à la figure 5a, selon l'invention, le plan P1 intersecte l'axe A1 au point I1, qui est situé en dehors du segment de l'axe A1 correspondant à la largeur active L1 du tambour supérieur.

De même, et tel qu'illustré à la figure 5b, selon l'invention, le plan P2 intersecte l'axe A2 au point I2, en dehors du segment de l'axe A2 correspondant à la largeur active L2 du tambour inférieur.

Aussi l'invention est relative à un dispositif de cisaillement 1, destiné à fragmenter des déchets, en particulier fragmenter une bande métallique en plusieurs morceaux.

Ce dispositif comprend deux tambours 2,3 contrarotatifs, disposés l'un en face de l'autre, dont les axes de rotation A1 et A2 sont sensiblement parallèles. Un dispositif d'entraînement relie les tambours et synchronise leur vitesse de rotation. Ce dispositif peut comprendre deux arbres de rotation 8,9 respectivement rigidement solidaires des deux tambours 2,3, ainsi qu'un engrenage comprenant une première roue dentée 90 et au moins une seconde roue dentée 80,81.

La première roue dentée 90 est montée sur l'arbre 9 et ladite au moins une seconde roue dentée 80,81 montée sur l'autre arbre 8 engrène avec la première roue dentée 90. Afin de supprimer le jeu angulaire entre les tambours 2 et 3, deux roues dentées 80, 81 de l'arbre 8, légèrement décalées engrènent avec la première roue dentée 90.

De préférence, le tambour 2 et son arbre 8 sont constitués par un élément métallique d'un seul tenant. De même le tambour 3 et son arbre 9 sont constitués par un élément métallique d'un seul tenant. On supprime ainsi les risques de mauvais positionnements des tambours sur leurs arbres respectifs.

Le dispositif comprend au moins une paire de lames 20, 30, 21, 31, 22, 32, 23 ,33, les lames 20, 30 ; 21, 31; 22, 32 ; 23 ,33 de la paire étant portées respectivement par les deux tambours 2,3, les lames de la paire étant destinées à coopérer par effet de cisaillement lors de la rotation des tambours 2, 3 pour couper les déchets.

De préférence, le dispositif peut comprendre plusieurs paires de lames 20, 30, 21, 31, 22, 32, 23 ,33. Les lames 20, 21, 22, 23 (resp 30, 31, 32, 33) de chaque tambour sont réparties, de préférence régulièrement sur la circonférence du tambour 2. Selon le mode de réalisation illustré, chaque tambour 2 (ou 3) présente quatre lames 20, 21, 22, 23 (resp 30, 31, 32, 33), reparties tous les 90° autour de l'axe de rotation du tambour A1 (resp A2).

Les lames de la ou chaque paire présente, à partir de leur tranchant 4, des faces planes, dites faces de recouvrement 5,6, se recouvrant et en regard au moins localement lors du cisaillement entre lames 20, 30 ; 21, 31; 22, 32 ; 23 ,33. Un tel recouvrement, selon la distance « dr », est illustré en détail à la figure 4a.

Chaque lame est fixée transversalement au tambour 2 ;3, sous un angle par rapport à l'axe de rotation A1 ;A2 du tambour 2 ; 3 et de telle façon que le plan passant par ladite face de recouvrement 5,6 de la lame forme un angle avec l'axe de rotation A1 ;A2 du tambour correspondant, de manière à produire un cisaillement progressif.

Telles qu'illustrées à la figure 5, les lames 20,30 d'une paire portées par les deux tambours 2,3 ont des orientations obliques contraires. Comme visible à cette figure 5, le tranchant de la lame 20 (ou 30) et l'axe de rotation A1 (ou A2) du tambour correspondant ne sont ainsi pas coplanaires. Comme visible aux figures 6 ou 7, vue selon la direction radiale passant par la lame notamment en son milieu, le tranchant de lame 20 et l'axe de rotation du tambour correspondant sont inclinés d'un angle correspondant à la première inclinaison de lame permettant d'obtenir la coupe progressive, en l'espèce un angle de 15° et telle qu'illustrée aux figures 6 et 7.

Ainsi, le cisaillement commence, localement, aux deux extrémités longitudinales des lames 20,30 de la paire et se déplace le long des lames jusqu'aux deux extrémités longitudinales opposées, ce qui permet de diminuer très sensiblement le bruit de coupe.

Selon l'invention, et tel que développé précédemment, ladite face de recouvrement 5 ;6 de chaque lame 20 ; 30 ; 21 ; 31; 22, 32 ; 23 ;33 est inclinée par rapport au tambour 2 ;3 correspondant de telle manière que le plan P1 ;P2 passant par ladite face de recouvrement 5 ;6 n'intersecte pas l'axe de rotation du tambour 2 ; 3 sur la largeur active L1 ;L2 du tambour 2 ;3.

Une telle inclinaison permet d'offrir un recouvrement plus important lors du cisaillement, pour un même jeu de coupe, sans risque d'interférence entre les lames.

Selon un mode de réalisation, les lames d'une paire sont positionnées sur leur tambour de manière à permettre un chevauchement desdites faces de recouvrement 5,6 des lames, lors du cisaillement, local, supérieur à 0.33% de l'entraxe de coupe, et pour un jeu de coupe inférieur à 0.02 mm.

Il est alors possible, et contrairement aux dispositifs à coupe progressive de l'état de la technique de prévoir des lames à tranchants rectilignes, et non à tranchants courbes tel qu'enseigné notamment dans les documents DE1117358, ou encore FR 2 640 174. Selon un mode de réalisation illustré, les lames de la paire, présentent chacune un tranchant rectiligne 4, actif, défini à l'intersection de la face de recouvrement 5 (ou 6), plane, et d'une face extérieure 50 (ou 60) dit supérieure de la lame, plane.

Selon une exécution, les lames 20 ; 30 ; 21 ; 31; 22, 32 ; 23 ; 33 sont chacune de section constante longitudinalement, ce qui simplifie leur fabrication. Le corps des lames peut être sensiblement parallélépipédique, tel qu'illustré aux figures.

Chaque lame 20 ; 30 ; 21 ; 31; 22, 32 ; 23 ; 33 peut présenter au moins une face latérale 51 (ou 61), plane, apte à constituer ladite face de recouvrement 5 (ou 6) au moins sur une portion de surface, ledit tranchant 4 étant défini à l'intersection de la face latérale 51 (ou 61) et de la face extérieure, supérieure (50 ou 60).

Avantageusement, chaque lame de la paire peut être une lame réversible, possédant deux positions de montage sur le tambour, ladite lame présentant deux faces latérales 51,52 ; 61,62 planes, parallèles et opposées, aptes à constituer chacune au moins sur une portion de surface ladite face de recouvrement 5,5" ;6,6", un premier tranchant 4, rectiligne, étant défini à l'intersection d'une des faces latérales et d'une face extérieure 50 ;60, supérieure, et un deuxième tranchant 4", rectiligne étant défini à l'intersection de l'autre face latérale 52 ;62 et d'une autre face extérieure 53 ;63, inférieure.

Lorsque le premier tranchant 4 de lame est usé, il est possible de retirer la lame, de la retourner, et de la monter, dans son autre position de montage, pour exposer le deuxième tranchant 4".

De préférence, chaque lame est fixée au tambour 2 (ou 3), au niveau d'un logement dudit tambour comprenant une face plane d'appui 24 (ou 34) pour ladite face latérale portant le tranchant actif, directement ou par l'intermédiaire d'une cale.

Cette face plane d'appui 24 ou 34 constitue ainsi un plan de référence pour le positionnement du tranchant actif de la lame et sa face de recouvrement 5 ou 6.

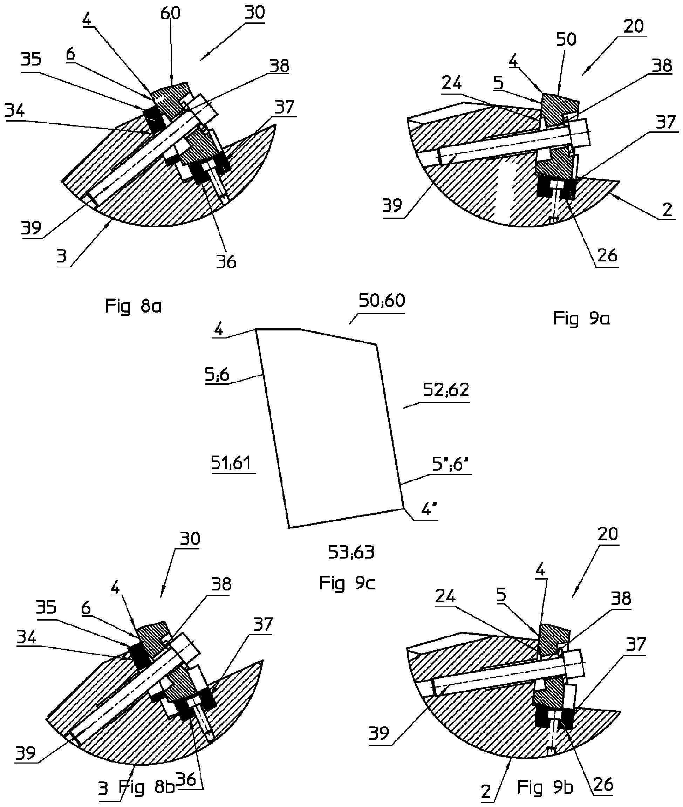

Lors du montage on vient appliquer la face latérale 51 portant le tranchant actif, directement contre cette face plane d'appui 24, tel qu'illustré aux figures 9a ou 9b, à titre d'exemple non limitatif, ou par l'intermédiaire d'une cale 35 d'épaisseur déterminée telle qu'illustrée aux figures 8a ou 8b.

On entend par tranchant actif, dans le cas d'une lame réversible à plusieurs tranchants, le tranchant (4 ou 4") exposé pour travailler au cisaillement, et non celui passif, non utilisé.

Une telle disposition permet de régler définitivement les positions circonférentielles des lames sur leur tambour (2 ou 3), sans que ce réglage dépende de l'usure des lames et en particulier de leur diminution d'épaisseur. Quelque soit la diminution de l'épaisseur des lames entre leurs faces latérales, les positions circonférentielles des lames sur le tambour sont figées et n'ont plus besoin d'être modifiées en cas d'usure des lames, contrairement à l'état de la technique enseigné par le document FR 2 640 174.

Ainsi le réglage par la cale 34 est inchangé entre une lame neuve telle qu'illustré à la figure 8a et une lame usée illustrée à la figure 8b, de moindre épaisseur.

De même le réglage direct par la face d'appui 24 est inchangé entre une lame neuve telle qu'illustrée à la figure 9a et une lame usée illustrée à la figure 9b, de moindre épaisseur.

Il n'est pas nécessaire de prendre en compte la diminution d'épaisseur entre les faces latérales due à l'usure, et tel que cela sera le cas si on venait appliquer la face latérale de la lame opposée à celle portant le tranchant actif de la lame tel qu'enseigné par le document FR 2640174. Un tel montage, bien que non préféré, est toutefois possible.

De préférence, le logement comprend, outre la face plane d'appui, dite première face d'appui 24 ;34 pour ladite face latérale de ladite lame, une second face d'appui 26;36, sensiblement perpendiculaire à la première face d'appui, servant d'appui pour une face extérieure 53 ;63 inférieure, de ladite lame, directement ou de préférence par l'intermédiaire d'une cale 37. Cette cale 37 d'épaisseur déterminée permet de régler le recouvrement (distance dr) entre les lames d'une même paire.

Chaque lame présente une pluralité d'alésages 38 pour le passage de vis 39. Ces alésages sont répartis sur la longueur de chaque lame, par exemple chacun traversant d'une face latérale 51 (resp 61) à l'autre 52 (resp 62) de la lame. Les vis de fixation coopérant avec des alésages taraudés s'étendant de préférence à partir de la face plane d'appui pour ladite face latérale.

Les arbres de rotation sont guidés en rotation au moyen de roulements, limitant le jeu axial, une motorisation permettant l'entraînement en rotation des tambours.

Naturellement d'autres modes de réalisation auraient pu être envisagés sans pour autant sortir du cadre de l'invention défini par les revendications ci-après.

### NOMENCLATURE

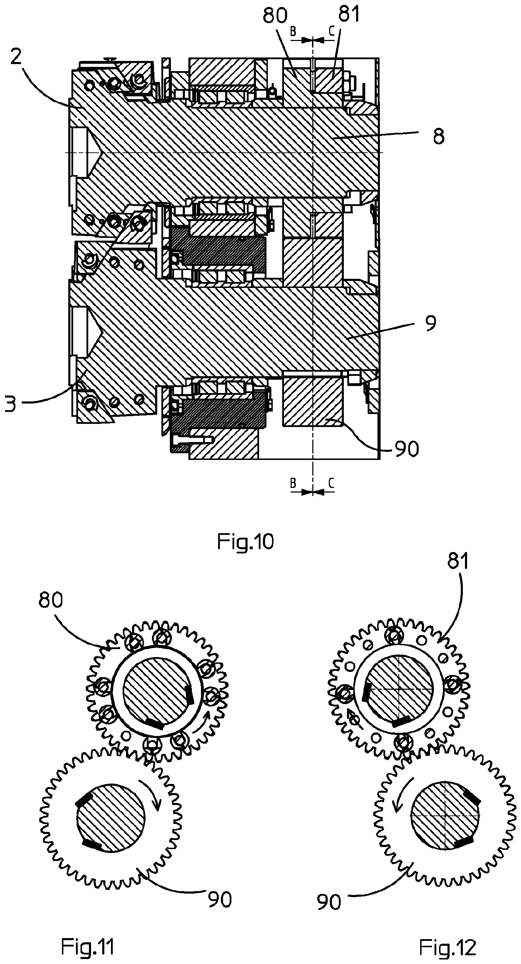

### Invention : (Figures 3 à 12)

1. Dispositif de cisaillement,
2,3. Tambours contrarotatifs, supérieur et inférieur,
4. Tranchant lame (Premier tranchant),
4". Tranchant lame (Deuxième tranchant de lame réversible)
5,6. Faces de recouvrement des lames d'une paire,
5",6". Faces de recouvrement des lames d'une paire à partir du deuxième tranchant (4"),
8. Arbre de rotation (tambour 2),
9. Arbre de rotation (tambour 3),
20, 21, 22, 23. Lames tambour supérieur,
30, 31, 32, 33. Lames tambour inférieur,
24. Face d'appui tambour 2 (Première face d'appui),
34. Face d'appui tambour 3 (Première face d'appui),
26. Deuxième face d'appui (tambour 2),
36. Deuxième face d'appui (tambour 3),
35. Cale (Première face d'appui),
37. Cale (Deuxième face d'appui),
38. Alésages (pour vis),
39. Vis,
50. Face extérieure, supérieure de la lame (repérée 20),
51,52. Faces latérales de la lame (repérée 20),
53. Face extérieure inférieure (lame repérée 20),
60. Face extérieure, supérieure de la lame (repérée 30), 61,62. Faces latérales de la lame (repérée 30),
63. Face extérieure inférieure (lame repérée 30),
A1. Axe de rotation tambour supérieur,
A2. Axe de rotation tambour inférieur,
P1. Plan passant par la face de recouvrement (5),
P2. Plan passant par la face de recouvrement (6),
I1. Point d'intersection entre le plan P1 et l'axe A1,
I2. Point d'intersection entre le plan P2 et l'axe A2,
L1. Largeur active du tambour supérieur,
L2. Largeur active du tambour inférieur,
dr. Recouvrement entre lames d'une même paire, dc. Jeu de coupe.

### Etat de la technique : (Figures 1 et 2) :

1'. Dispositif de cisaillement,
2',3'. Tambours contrarotatifs, supérieur et inférieur,
4'. Tranchant lame,
5',6', Faces de recouvrement des lames d'une paire,
20', 21', 22', 23'. Lames tambour supérieur,
30', 31', 32', 33'. Lames tambour inférieur,
A1'. Axe de rotation tambour supérieur,
A2'. Axe de rotation tambour inférieur,
C'. Coins de serrage,
P1'. Plan passant par la face de recouvrement (5'),
P2'. Plan passant par la face de recouvrement (6'),
I1'. Point d'intersection entre le plan P1' et l'axe A1',
I2'. Point d'intersection entre le plan P2' et l'axe A2',
L1'. Largeur active du tambour supérieur,
L2'. Largeur active du tambour inférieur,
dr'. Recouvrement entre lames.

## Revendications

1. Dispositif de cisaillement (1), destiné à fragmenter des déchets, en particulier fragmenter une bande métallique en plusieurs morceaux, ledit dispositif comprenant deux tambours (2,3) contrarotatifs, disposés l'un en face de l'autre, les axes de rotation (A1, A2) des tambours (2,3) étant parallèles, un dispositif d'entraînement reliant les tambours et synchronisant leur vitesse de rotation, et au moins une paire de lames (20, 30, 21, 31, 22, 32, 23 ,33), les lames (20, 30 ; 21, 31; 22, 32 ; 23 ,33) de la paire étant portées respectivement par les deux tambours (2,3), les lames de la paire étant destinées à coopérer par effet de cisaillement lors de la rotation des tambours (2 ,3) pour couper les déchets, les lames de la paire présentant, à partir de leur tranchant (4), des faces planes, dites faces de recouvrement (5,6), se recouvrant et en regard au moins localement lors du cisaillement entre lames (20, 30 ; 21, 31; 22, 32 ; 23, 33), chaque lame étant fixée transversalement au tambour (2 ;3), sous un angle par rapport à l'axe de rotation (A1 ; A2) du tambour (2 ;3) et de telle façon que le plan passant par ladite face de recouvrement (5,6) de la lame forme un angle avec l'axe de rotation (A1 ; A2) du tambour correspondant, le tranchant de lame (2,3) et l'axe de rotation (A1 ; A2) du tambour correspondant étant non coplanaires, les lames de la paire portées par les deux tambours présentant des orientations obliques contraires et de manière à produire un cisaillement progressif,
ladite face de recouvrement (5 ;6) de chaque lame (20 ; 30 ; 21 ; 31; 22, 32 ; 23 ;33) est doublement inclinée par rapport au tambour (2 ;3) de telle manière que le plan (P1 ; P2) passant par ladite face de recouvrement (5 ;6) n'intersecte pas l'axe de rotation du tambour (2 ; 3) sur la largeur active (L1 ; L2) du tambour, ledit dispositif de cisaillement étant **caractérisé en ce que** ledit plan (P1 ; P2) intersecte l'axe de rotation du tambour en un point (I1 ; I2) situé en dehors du segment de l'axe (A1 ; A2) correspondant à la largeur active (L1 ; L2) du tambour (2,3).

2. Dispositif selon la revendication 1, dans lequel la double inclinaison de lame étant déterminée par référence à une lame à tranchant rectiligne sensiblement parallèle à l'axe de rotation du tambour, le plan de la face de recouvrement du tranchant actif de chaque lame passant sensiblement par l'axe de rotation du tambour correspondant, ou un plan parallèle voisin de ce dernier :
- une première inclinaison de la face de recouvrement est obtenue par rotation de la lame selon un axe de rotation passant par la face de recouvrement, sensiblement radiale et perpendiculaire à l'axe de rotation du tambour, et de manière à obtenir le cisaillement progressif, la rotation étant de 15° (+/-5°),
- une deuxième inclinaison est obtenue par rotation de la lame, selon un axe de rotation, passant par la face de recouvrement, sensiblement parallèle au tranchant de lame, la rotation étant de 9,5° (+/-5°).

3. Dispositif selon la revendication 1 ou 2, dans lequel les lames d'une paire sont positionnées sur leur tambour de manière à permettre un chevauchement desdites faces de recouvrement des lames, lors du cisaillement, local, supérieur à 0.33% de l'entraxe de coupe sur toute la longueur du tranchant, et pour un jeu de coupe inférieur à 0.02 mm.

4. Dispositif selon l'une des revendications 1 à 3, dans lequel les lames (20, 30 ; 21, 31; 22, 32 ; 23 ,33) de la paire, présentent chacune un tranchant (4), rectiligne défini à l'intersection de la face de recouvrement (5 ;6) et d'une face extérieure (50 ;60) de la lame.

5. Dispositif selon la revendication 4, dans lequel les lames (20, 30 ; 21, 31; 22, 32 ; 23, 33) de la paire sont chacune de section constante longitudinalement.

6. Dispositif selon la revendication 4 ou 5, dans lequel chaque lame présente au moins une face latérale (51 ; 61), plane, apte à constituer ladite face de recouvrement, au moins sur une portion de surface, ledit tranchant (4) étant défini à l'intersection de la face latérale (51 ;61) et de la face extérieure (50 ;60), supérieure.

7. Dispositif selon la revendication 6, dans lequel chaque lame de la paire est une lame réversible, possédant deux positions de montage sur le tambour, ladite lame présentant deux faces latérales (51,52 ; 61,62), planes, parallèles et opposées, aptes à constituer chacune au moins sur une portion de surface ladite face de recouvrement (5,5"; 6,6"), un premier tranchant (4), rectiligne, étant défini à l'intersection d'une des faces latérales et d'une face extérieure (50 ;60), supérieure, et un deuxième tranchant (4"), rectiligne étant défini à l'intersection de l'autre face latérale et d'une autre face extérieure (53 ;63), inférieure.

8. Dispositif selon la revendication 6 ou 7, dans lequel chaque lame est fixée au tambour, au niveau d'un logement dudit tambour comprenant une face plane d'appui (24 ; 34) pour ladite face latérale (51,52 ; 61,62) portant le tranchant actif, directement ou par l'intermédiaire d'une cale (35).

9. Dispositif selon la revendication 8, dans lequel le logement comprend, outre la face plane d'appui, dite première face d'appui (24,34) pour ladite face latérale de ladite lame, une second face d'appui (26, ;36), sensiblement perpendiculaire à la première face d'appui, servant d'appui pour une face extérieure (53 ;63), inférieure, de ladite lame, directement ou par l'intermédiaire d'une cale (37).

10. Dispositif selon la revendication 9, dans lequel chaque lame présente une pluralité d'alésages (38) pour le passage de vis (39), lesdites vis (39) coopérant avec des alésages taraudés s'étendant à partir de la face plane d'appui (24 ;34) pour ladite face latérale.

11. Dispositif selon l'une des revendications 1 à 10, dans lequel ledit dispositif d'entraînement reliant les tambours (2,3) et synchronisant leur vitesse de rotation comprend deux arbres (8,9) de rotation respectivement rigidement solidaires des deux tambours (2,3), ainsi qu'un engrenage reliant les deux arbres comprenant une première roue dentée (90) et au moins une seconde roue dentée (80,81).

12. Dispositif selon la revendication 11, dans lequel chaque tambour (2 ;3) et son arbre de rotation (8 ;9) correspondant sont constitués par un élément métallique d'un seul tenant.

13. Utilisation d'un dispositif selon l'une des revendications 1 à 12, dans le domaine du traitement de bande métallique, en particulier des lignes de laminage, pour fragmenter les chutes de rive en plusieurs morceaux.

14. Utilisation selon la revendication 13 pour fragmenter une chute de rive d'épaisseur inférieure à 1 mm, voire inférieure à 0.3 mm.

15. Utilisation selon la revendication 13 ou 14 pour fragmenter une chute de rive dans un matériau présentant un coefficient d'allongement supérieur à 20%.

## Patentansprüche

1. Schervorrichtung (1), die dazu bestimmt ist, Abfälle zu zerteilen, insbesondere ein Metallband in mehrere Stücke zu zerteilen, wobei die Vorrichtung zwei gegenläufige Trommeln (2, 3) umfasst, die einander gegenüberliegend angeordnet sind, wobei die Drehachsen (A1, A2) der Trommeln (2, 3) parallel sind, wobei eine Antriebsvorrichtung die Trommeln verbindet und ihre Drehgeschwindigkeit synchronisiert, und mindestens ein Klingenpaar (20, 30; 21, 31; 22, 32; 23, 33) umfasst, wobei die Klingen (20, 30; 21, 31; 22, 32; 23, 33) des Paars jeweils von den zwei Trommeln (2, 3) getragen werden, wobei die Klingen des Paars dazu bestimmt sind, durch Scherwirkung bei der Drehung der Trommeln (2, 3) zusammenzuwirken, um die Abfälle zu zerschneiden, wobei die Klingen des Paars ausgehend von ihrer Schneide (4) flache Seiten, Überlappungsseiten (5, 6) genannt, die einander überlappen und einander zumindest lokal beim Scheren der Klingen (20, 30; 21, 31; 22, 23; 23, 33) gegenüberliegen, wobei jede Klinge quer zur Trommel (2; 3) unter einem Winkel in Bezug zur Drehachse (A1; A2) der Trommel (2; 3) und derart befestigt ist, dass die Ebene, die durch die Überlappungsseite (5, 6) der Klinge verläuft, einen Winkel mit der Drehachse (A1; A2) der entsprechenden Trommel bildet, wobei die Schneide der Klinge (2, 3) und die Drehachse (A1; A2) der entsprechenden Trommel nicht koplanar sind, wobei die Klingen des Paars, die von den zwei Trommeln getragen werden, entgegengesetzte schräge Ausrichtungen aufweisen, um ein progressives Scheren zu erzeugen, wobei die Überlappungsseite (5; 6) jeder Klinge (20, 30; 21, 31; 22, 32; 23, 33) doppelt in Bezug zur Trommel (2; 3) geneigt ist, so dass die Ebene (P1; P2), die durch die Überlappungsseite (5; 6) verläuft, nicht die Drehachse der Trommel (2; 3) auf der aktiven Breite (L1; L2) der Trommel schneidet, wobei die Schervorrichtung **dadurch gekennzeichnet ist, dass** die Ebene (P1; P2) die Drehachse in einem Punkt (I1; I2) schneidet, der sich außerhalb des Segments der Achse (A1; A2) befindet, entsprechend der aktiven Breite (L1; L2) der Trommel (2, 3).

2. Vorrichtung nach Anspruch 1, bei der, die doppelte Neigung der Klinge in Bezug zu einer Klinge mit gerader Schneide im Wesentlichen parallel zur Drehachse der Trommel bestimmt ist, wobei die Ebene der Überlappungsseite der aktiven Schneide jeder Klinge im Wesentlichen durch die Drehachse der entsprechenden Trommel oder eine benachbarte parallele Ebene zu dieser letztgenannten verläuft:
- eine erste Neigung der Überlappungsseite durch Drehung der Klinge entlang einer Drehachse erhalten wird, die durch die Überlappungsseite, die im Wesentlichen radial und senkrecht auf die Drehachse der Trommel ist, verläuft, erhalten wird, wobei, um das progressive Scheren zu erhalten, die Drehung 15° (+/-5°) beträgt,
- wobei eine zweite Neigung durch Drehung der Klinge entlang einer Drehachse erhalten wird, die die Überlappungsseiteschneidet, und die im Wesentlichen parallel zur Schneide der Klinge ist, wobei die Drehung 9,5° (+/- 5°) beträgt.

3. Vorrichtung nach Anspruch 1 oder 2, bei der die Klingen eines Paars auf ihrer Trommel derart positioniert sind, dass sie eine lokale Überlappung der Überlappungsseiten der Klingen beim Scheren von mehr als 0,33 % des Schnittabstands über die gesamte Länge der Schneide und bei einem Schnittspalt von weniger als 0,02 mm ermöglichen.

4. Vorrichtung nach einem der Ansprüche 1 bis 3, bei der die Klingen (20, 30; 21, 31; 22, 32; 23, 33) des Paars jeweils eine geradlinige Schneide (4) aufweisen, die an der Schnittstelle der Überlappungsseite (5; 6) und einer Außenseite (50; 60) der Klinge definiert sind.

5. Vorrichtung nach Anspruch 4, bei der die Klingen (20, 30; 21, 31; 22, 32; 23, 33) des Paars jeweils einen in Längsrichtung konstanten Querschnitt aufweisen.

6. Vorrichtung nach Anspruch 4 oder 5, bei der jede Klinge mindestens eine ebene Seitenfläche (51; 61) aufweist, die geeignet ist, die Überlappungsseite auf mindestens einem Flächenabschnitt darzustellen, wobei die Schneide (4) an der Schnittstelle der Seitenfläche (51; 61) und der oberen Außenfläche (50; 60) definiert ist.

7. Vorrichtung nach Anspruch 6, bei der jede Klinge des Paars eine reversible Klinge ist, die zwei Montagepositionen auf der Trommel besitzt, wobei die Klinge zwei ebene, parallele und gegenüberliegende Seitenflächen (51, 52; 61, 52) aufweist, die geeignet sind, jeweils mindestens auf einem Flächenabschnitt der Überlappungsseite (5, 5"; 6, 6") eine geradlinige Schneide (4), die an der Schnittstelle einer der Seitenflächen und einer oberen Außenfläche (50; 60) definiert ist, und eine zweite geradlinige Schneide (4") darzustellen, die an der Schnittstelle der anderen Seitenfläche und einer unteren Außenfläche (53; 63) definiert ist.

8. Vorrichtung nach Anspruch 6 oder 7, bei der jede Klinge an der Trommel im Bereich einer Aufnahme der Trommel, umfassend eine ebene Stützfläche (24; 34) für die Seitenfläche (51, 52; 61, 62), die die aktive Schneide trägt, direkt oder mit Hilfe eines Keils (35) befestigt ist.

9. Vorrichtung nach Anspruch 8, bei der die Aufnahme außer der Stützfläche, erste Stützfläche (24, 34) für die Seitenfläche der Klinge genannt, eine zweite Stützfläche (26; 36), im Wesentlichen senkrecht auf die erste Stützfläche, umfasst, die als Abstützung für eine untere Außenfläche (53; 63) der Klinge direkt oder mit Hilfe eines Keils (37) dient.

10. Vorrichtung nach Anspruch 9, bei der jede Klinge eine Vielzahl von Bohrungen (38) für den Durchgang von Schrauben (39) aufweist, wobei die Schrauben (39) mit Gewindebohrungen zusammenwirken, die sich von der ebenen Stützfläche (24; 34) für die Seitenfläche aus erstrecken.

11. Vorrichtung nach einem der Ansprüche 1 bis 10, bei der die Antriebsvorrichtung, die die Trommeln (2, 3) verbindet und ihre Drehgeschwindigkeit synchronisiert, zwei drehende Wellen (8, 9), die jeweils starr mit den zwei Trommeln (2, 3) verbunden sind, sowie eine Verzahnung umfasst, die die zwei Wellen verbindet, umfassend ein erstes Zahnrad (90) und mindestens ein zweites Zahnrad (80, 81).

12. Vorrichtung nach Anspruch 11, bei der jede Trommel (2; 3) und ihre entsprechende drehende Welle (8; 9) von einem einstückigen metallischen Element gebildet sind.

13. Verwendung einer Vorrichtung nach einem der Ansprüche 1 bis 12 auf dem Gebiet der Metallbandbearbeitung, insbesondere Walzanlagen, um den Randstreifenabfall in mehrere Stücke zu zerteilen.

14. Verwendung nach Anspruch 13, um den Randstreifenabfall mit einer Dicke unter 1 mm bzw. unter 0,3 mm zu zerteilen.

15. Verwendung nach Anspruch 13 oder 14, um einen Randstreifenabfall aus einem Material mit einem Dehnungskoeffizienten über 20% zu zerteilen.

## Claims

1. Shearing device (1), intended to fragment waste, in particular fragment a metal strip into multiple pieces, said device comprising two counter-rotating drums (2,3) positioned facing each other, the axes of rotation (A1, A2) of the drums (2, 3) being parallel to each other, a drive device connecting the drums and synchronising the speed of rotation of said drums, and at least one pair of blades (20, 30, 21, 31, 22, 32, 23,33), the blades (20, 30; 21, 31; 22, 32; 23,33) of the pair being carried by the two drums (2,3), respectively, the blades of the pair being intended to cooperate via a shearing effect during the rotation of the drums (2,3) in order to cut the waste, the blades of the pair having, starting from the cutting edge (4) of said blades, flat faces, called overlapping faces (5,6), that overlap with each other and face each other at least locally during the shearing between blades (20, 30; 21, 31; 22, 32; 23, 33), each blade being attached transversely to the drum (2;3), at an angle with respect to the axis of rotation (A1;A2) of the drum (2;3) and in such a way that the plane passing through said overlapping face (5,6) of the blade forms an angle with the axis of rotation (A1;A2) of the corresponding drum, the blade cutting edge (2,3) and the axis of rotation (A1;A2) of the corresponding drum being not coplanar, the blades of the pair carried by the two drums having opposite diagonal orientations and in such a way as to produce progressive shearing,
said overlapping face (5;6) of each blade (20; 30; 21; 31; 22, 32; 23,33) is doubly inclined with respect to the drum (2;3) in such a way that the plane (P1;P2) passing through said overlapping face (5;6) does not intersect the axis of rotation of the drum (2; 3) over the active width (L1;L2) of the drum, said shearing device being **characterised in that** the plane (P1;P2) intersects the axis of rotation of the drum at a point (I1; 12) located outside of the segment of the axis (A1;A2) corresponding to the active width (L1;L2) of the drum (2,3).

2. Device according to claim 1, wherein the double blade inclination being determined with respect to a blade having a rectilinear cutting edge substantially parallel to the axis of rotation of the drum, the plane of the overlapping face of the active cutting edge of each blade passing substantially through the axis of rotation of the corresponding drum or a parallel plane adjacent to said axis:
- a first inclination of the overlapping face is obtained by rotation of the blade about an axis of rotation that passes through the overlapping face, substantially radial and perpendicular to the axis of rotation of the drum, and in such a way as to obtain the progressive shearing, the rotation being of 15° (+/- 5°),
- a second inclination is obtained by rotation of the blade about an axis of rotation that passes through the overlapping face and is substantially parallel to the cutting edge of the blade, the rotation being of 9.5° (+/- 5°).

3. Device according to claim 1 or 2, wherein the blades of a pair are positioned on the drum of said blades in such a way as to allow local overlapping of said overlapping faces of the blades, during shearing, greater than 0.33% of the cutting centre-to-centre distance over the entire length of the cutting edge, for a cutting clearance of less than 0.02mm.

4. Device according to one of claims 1 to 3, wherein the blades (20, 30; 21, 31; 22, 32; 23, 33) of the pair each have a rectilinear cutting edge (4) defined at the intersection of the overlapping face (5;6) and an outer face (50;60) of the blade.

5. Device according to claim 4, wherein the blades (20, 30; 21, 31; 22, 32; 23,33) of the pair each have a constant cross-section longitudinally.

6. Device according to claim 4 or 5, wherein each blade has at least one flat lateral face (51; 61) suitable for forming said overlapping face at least over a surface portion, said cutting edge (4) being defined at the intersection of the lateral face (51; 61) and the upper outer face (50;60).

7. Device according to claim 6, wherein each blade of the pair is a reversible blade having two mounting positions on the drum, said blade having two flat, parallel and opposite lateral faces (51,52; 61,62) suitable for each forming, at least over a surface portion, said overlapping face (5,5"; 6,6"), a first rectilinear cutting edge (4) being defined at the intersection of one of the lateral faces and an upper outer face (50;60), and a second rectilinear cutting edge (4") being defined at the intersection of the other lateral face and another lower outer face (53;63).

8. Device according to claim 6 or 7, wherein each blade is fastened to the drum at a housing of said drum comprising a flat bearing face (24; 34) for said lateral face (51,52; 61,62) carrying the active cutting edge, directly or via a wedge (35).

9. Device according to claim 8, wherein the housing comprises, besides the flat bearing face, called first bearing face (24,34) for said lateral face of said blade, a second bearing face (26;36) substantially perpendicular to the first bearing face and acting as a support for a lower outer face (53;63) of said blade, directly or via a wedge (37).

10. Device according to claim 9, wherein each blade has a plurality of bores (38) for screws (39) to pass through, said screws (39) cooperating with threaded bores extending from the flat bearing face (24;34) for said lateral face.

11. Device according to one of claims 1 to 10, wherein said drive device connecting the drums (2,3) and synchronising the speed of rotation of said drums comprises two rotating shafts (8,9) rigidly connected to the two drums (2,3), respectively, and a gear connecting the two shafts, comprising a first toothed wheel (90) and at least one second toothed wheel (80,81).

12. Device according to claim 11, wherein each drum (2;3) and the corresponding rotating shaft (8;9) thereof consist of a single-piece metal element.

13. Use of a device according to one of claims 1 to 12, in the field of processing metal strips, in particular the field of rolling mills, to fragment edge scrap into multiple pieces.

14. Use according to claim 13 to fragment edge scrap having a thickness of less than 1mm or even less than 0.3mm.

15. Use according to claim 13 or 14 to fragment edge scrap made of a material having an elongation coefficient greater than 20%.
